(19)

Europäisches Patentamt

European Patent Office

Office européen des brevets

(11) **EP 2 680 033 A1**

(12) **EUROPEAN PATENT APPLICATION**

(43) Date of publication:
**01.01.2014 Bulletin 2014/01**

(51) Int Cl.:
*G01S 13/87* (2006.01)     *G01S 5/12* (2006.01)

(21) Application number: **13003155.2**

(22) Date of filing: **20.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012  US 201213538376**

(71) Applicant: **Broadcom Corporation Irvine, CA 92617 (US)**

(72) Inventors:
• **van Diggelen, Frank**
  **San Jose, CA 95120 (US)**
• **Belov, Vladimir**
  **Union City, CA 94587 (US)**

(74) Representative: **Jehle, Volker Armin et al Bosch Jehle Patentanwaltsgesellschaft mbH Flüggenstrasse 13 80639 München (DE)**

(54) **Position determination using round-trip delay and angle-of-arrival**

(57)     Embodiments provide systems and methods for position determination. In an embodiment, position is estimated using round-trip delay measurements based on one or more received signals. In another embodiment, position is estimated by further using angle-of-arrival measurements based on one or more received signals. Embodiments may be used by a fixed or mobile device to self-learn its position and to assist other nearby devices learn their positions.

FIG. 1

EP 2 680 033 A1

**Description**

**Field of the Invention**

The present disclosure relates generally to positioning systems.

BACKGROUND

**Background Art**

A common positioning solution, particularly for indoor environments, relies on fixed access points (e.g., WiFi access points) assisting mobile devices, such as cellular handsets, to determine their positions. This solution requires that the access points know their positions. Today, access points are pre-configured with their positions upon installation, which makes this solution both expensive and time consuming.

BRIEF SUMMARY OF THE INVENTION

According to an aspect, a method for position estimation comprises:

receiving, at a device, first, second, and third signals, the first, second, and third signals transmitted from first, second, and third locations, respectively;
calculating first, second, and third round-trip delays from the first, second, and third signals, respectively;
calculating first, second, and third distance estimates based on the first, second, and third round-trip delays, respectively, wherein the first, second, and third distance estimates estimate distances from the device to the first, second, and third locations, respectively; and
computing a position estimate of the device based on the first, second, and third distance estimates.

Advantageously, the device is a fixed access point or a mobile device.
Advantageously, at least one of the first, second, and third signals is transmitted by a mobile device.
Advantageously, the first, second, and third signals are transmitted by a same mobile device.
Advantageously, at least one of the first, second, and third signals is transmitted by a fixed access point.
Advantageously, the device is a fixed access point, and wherein at least one of the first, second, and third signals is transmitted by another fixed access point.
Advantageously, at least one of the first, second, and third signals includes a wireless local area network (WLAN) frame.
Advantageously, the first, second, and third signals include respectively first, second, and third position estimates, the first, second, and third position estimates associated respectively with the first, second, and third locations.
Advantageously, computing the position estimate of the device comprises computing the position estimate based on the first, second, and third distance estimates and the first, second, and third position estimates.
According to an aspect, a method for position estimation comprises:

receiving, at a device, first and second signals, the first and second signals transmitted from first and second locations, respectively;
calculating first and second round-trip delays from the first and second signals, respectively;
calculating first and second distance estimates based on the first and second round-trip delays, respectively, wherein the first and second distance estimates estimate distances from the device to the first and second locations, respectively;
calculating first and second angles of arrival from the first and second signals, respectively; and
computing a position estimate of the device based on the first and second distance estimates and the first and second angles of arrival.

Advantageously, the first and second signals include respectively first and second position estimates, the first and second position estimates associated respectively with the first and second locations.
Advantageously, computing the position estimate of the device comprises computing an azimuth angle of the device based on the first and second position estimates and the first and second angles of arrival.
Advantageously, computing the position estimate of the device comprises computing the position estimate based on the azimuth angle, the first position estimate, and the first angle of arrival.
Advantageously, the method further comprises:

receiving a third signal, the third signal transmitted from a third location by another device;

calculating a third round-trip delay from the third signal;

calculating a third distance estimate based on the third round-trip delay, wherein the third distance estimate estimates a distance from the device to the third location;

calculating a third angle of arrival from the third signal; and

computing a third position estimate of the third location based on the azimuth angle, the third distance estimate, and the third angle of arrival.

Advantageously, the device is a fixed access point or a mobile device.

Advantageously, at least one of the first and second signals is transmitted by a mobile device or by a fixed access point.

Advantageously, the first and second signals are transmitted by a same mobile device.

Advantageously, the first and second signals are transmitted by different mobile devices.

According to an aspect, a positioning network comprises:

a first device configured to receive a first signal from a mobile device and to calculate a first distance estimate to the mobile device;

a second device configured to receive a second signal from the mobile device and to calculate a second distance estimate to the mobile device; and

a third device configured to receive a third signal from the mobile device and to calculate a third distance estimate to the mobile device,

wherein the first device is further configured to compute a position estimate of the mobile device based on the first, second, and third distance estimates and position estimates of the first, second, and third devices.

Advantageously, the first device is further configured to communicate the position estimate to the mobile device.

BRIEF DESCRIPTION OF THE DRAWINGS/FIGURES

The accompanying drawings, which are incorporated herein and form a part of the specification, illustrate the present disclosure and, together with the description, further serve to explain the principles of the disclosure and to enable a person skilled in the pertinent art to make and use the disclosure.

FIG. 1 illustrates an example embodiment of the present disclosure.

FIG. 2 illustrates an example embodiment of the present disclosure.

FIG. 3 illustrates an example embodiment of the present disclosure.

FIG. 4 illustrates an example embodiment of the present disclosure.

FIG. 5 illustrates an example embodiment of the present disclosure.

FIG. 6 is a process flowchart of a method according to an embodiment of the present disclosure.

FIG. 7 is a process flowchart of a method according to an embodiment of the present disclosure.

FIG. 8 is a process flowchart of a method according to an embodiment of the present disclosure.

FIG. 9 illustrates an example computer system that can be used to implement aspects of the present disclosure.

The present disclosure will be described with reference to the accompanying drawings. Generally, the drawing in which an element first appears is typically indicated by the leftmost digit(s) in the corresponding reference number.

DETAILED DESCRIPTION OF EMBODIMENTS

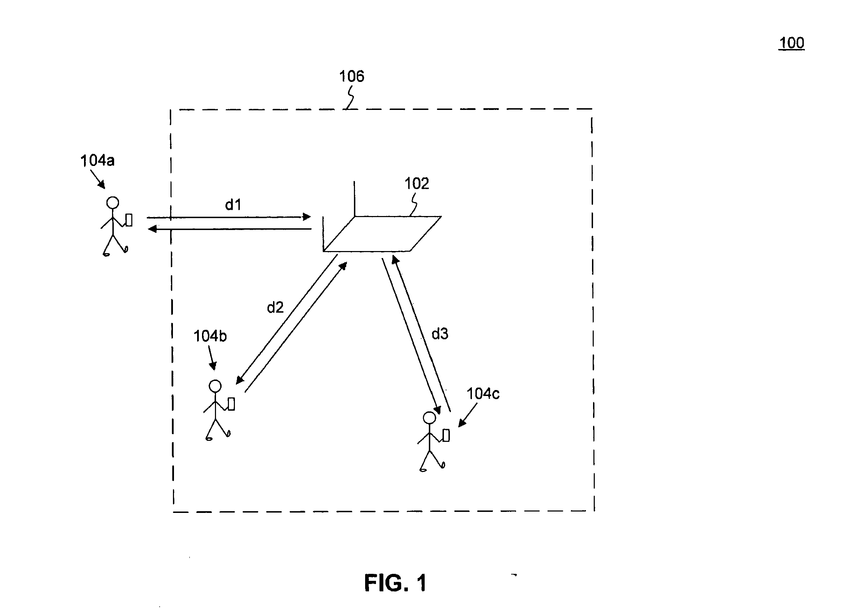

FIG. 1 illustrates an example 100 of an embodiment of the present disclosure. Example 100 is provided for the purpose of illustration only and is not limiting. As shown in FIG. 1, example 100 includes a device 102 and a plurality of mobile devices 104a-c, in the vicinity of a location 106. Location 106 may be an indoor location, such as a shopping area, office environment, etc., or an outdoor location. Devices 104a-c may be different devices or may represent the same device at different times and locations.

Device 102 may be any device capable of wireless communication. For example, device 102 may communicate according to a wireless local area network (WLAN) protocol, such as the IEEE 802.11 protocol, or Bluetooth. Other wireless radio technologies may also be used by device 102, including any technology with communication ranges that can enable embodiments of the present disclosure as described herein. Device 102 may be fixed or mobile. For example, device 102 may be a WLAN or Bluetooth access point, which may or may not be connected to a network such as the Internet.

In embodiments, device 102 may be configured to assist in enabling a positioning solution in the vicinity of location 106. In one embodiment, device 102 is a fixed device and is pre-configured with its position. Device 102 may be further configured to transmit a signal that includes its position to other devices in the vicinity of location 106. The other devices may use the signal to estimate their own positions using techniques such as triangulation, multi-lateration, etc.

In another embodiment, device 102 is fixed or mobile and is configured to self-learn its position. After learning its position, device 102 may assist other devices in determining their positions as described above. Specifically, device 102 may be configured to receive one or more signals transmitted from one or more locations and to use the signals to determine its own position. The one or more signals may be transmitted by one or more fixed or mobile devices. In an embodiment, the one or more signals each includes a position estimate of the location from which it is transmitted.

According to embodiments, device 102 may rely on any number of signals to determine its position. A better position estimate is obtained when more signals are received, and an exact position can be determined when signals transmitted from at least three different locations are received by device 102. For example, as shown in FIG. 1, device 102 may receive a signal from each of mobile devices 104a-c, located at three different locations in the vicinity of location 106. It is noted that the signals may be received from the same device or from different devices. For example, in FIG. 1, mobile devices 104a-c may represent the same device or two or more devices around device 102.

The signal includes a position estimate of the mobile device at the time that the signal is transmitted. The position estimate of the mobile device may be obtained through a variety of positioning techniques, including Global Navigation Satellite System (GNSS) (e.g., Global Positioning System (GPS), GLONASS, etc.), cellular triangulation, and WLAN triangulation, for example. The position estimate may be current or a last known position of the mobile device.

In an embodiment, the signal received from a mobile device 104 may be part of a signal exchange between device 102 and mobile device 104. For example, the signal may be part of a negotiation process undertaken while mobile device 104 attempts to connect to a wireless network advertised by device 102. In an embodiment, the signal includes a WLAN frame, such as an IEEE 802.11 frame. The WLAN frame may be modified to include the position estimate of the mobile device.

In an embodiment, device 102 uses two or more frames included in the signal exchange between itself and a mobile device 104 to estimate a round-trip signal propagation delay to the mobile device. For example, device 102 may transmit a first frame to mobile device 104 and store a first timestamp value at, or immediately before, the time of transmission. Mobile device 104 may respond to the first frame by transmitting a second frame to device 102. Device 102 determines a second timestamp value at the time of reception of the second frame and estimates the round-trip delay as the difference between the second timestamp value and the first timestamp value. Device 102 may also account for known constant processing delays at device 102 (e.g., time delay between the setting of the first timestamp value and the actual transmission of the first frame, time delay between the actual reception of the second frame and the setting of the second timestamp value, etc.) and mobile device 104 (e.g., processing time between the reception of the first frame and the transmission of the second frame).

In other embodiments, the round-trip delay is estimated over more than two frames exchanged between device 102 and mobile device 104. Further, device 102 may perform several round-trip delay estimate measurements, each performed using two or more frames as described above, and then determine the round-trip delay estimate as the average of the several measurements.

Using the round-trip delay estimate, device 102 may estimate its distance to mobile device 104. In an embodiment, the distance, d, between device 102 and mobile device 104 is estimated as (RTD*c)/2, where RTD is the round-trip delay estimate and c is the speed of light. With at least three signals transmitted from three different locations, as shown in FIG. 1, for example, device 102 may determine at least three distance estimates $d_1$, $d_2$, and $d_3$, which estimate the distances between device 102 and at least three different locations. The at least three distance estimates, together with the at least three position estimates of the three locations included in the at least three signals, allow device 102 to estimate its own position.

In embodiments, device 102 may use any number of received signals to estimate its position. For example, device 102 may receive a first signal transmitted from a first location by device 104a. Device 102 may use the first signal to determine distance estimate $d_1$ to the first location. This places device 102 anywhere on a circle centered at the first location and having a radius equal to $d_1$. Subsequently, device 102 may receive a second signal transmitted from a second location by mobile device 104b. The second signal allows device 102 to determine distance estimate $d_2$ to the second location and to further refine its knowledge of its position. Specifically, device 102 may now determine that it is positioned at either one of two points of intersection (or at the point of tangency) of two circles centered at the first and second locations and having radii equal to $d_1$ and $d_2$, respectively. Then, device 102 may receive a third signal transmitted from a third location by mobile device 104c. The third signal allows device 102 to determine distance estimate $d_3$ to the third location and to now determine a position estimate by triangulation, for example, based on distance estimates $d_1$, $d_2$, and $d_3$. As subsequent signals are received from other locations, device 102 may continue to refine its position estimate by performing a multi-lateration process, for example.

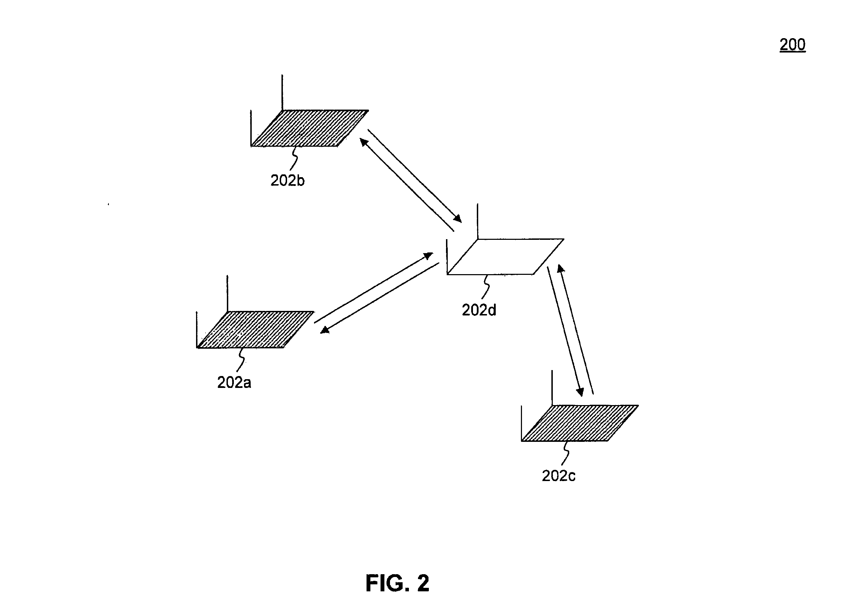

In an embodiment, after learning its position (e.g., determining a position estimate), device 102 may assist other devices in determining their own positions. This is illustrated in FIG. 2, which shows an example 200 according to an embodiment of the present disclosure. Specifically, example 200 illustrates three devices 202a-c with learned positions (either pre-configured or self-learned) assisting a fourth device 202d to determine its position. Devices 202a-d may be similar to device 102 described above.

In an embodiment, device 202d may perform similar position determination algorithms (e.g., based on round-trip delay measurements) as described above with respect to device 102. Accordingly, device 202d may determine its position based on signals received from devices 202a-c.

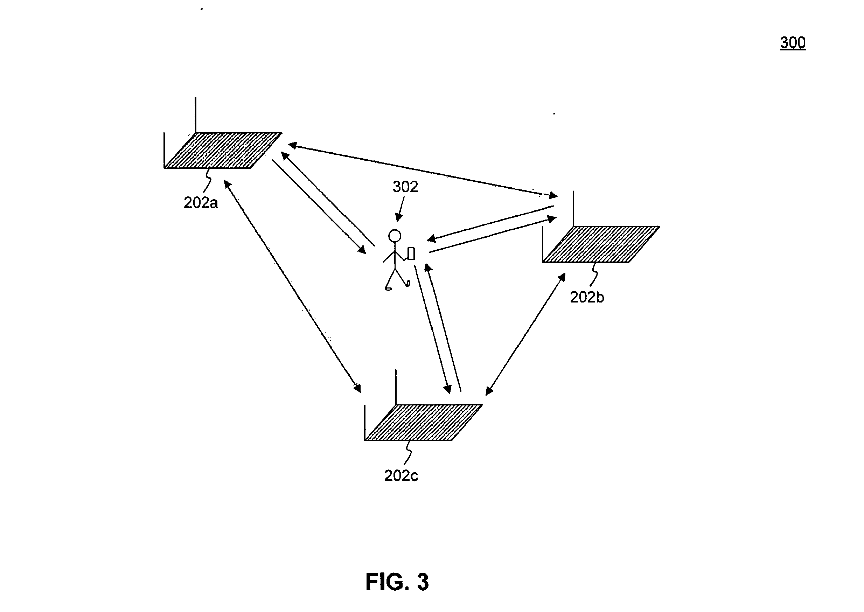

In another embodiment, device 202d may not support round-trip delay based position determination. Accordingly, devices 202a-c may cooperate to determine the position of device 202d. For example, devices 202a-c may individually estimate their respective distances to device 202d (e.g., using round-trip delay measurement) and then share the distance estimates and their own position estimates with each other. In an embodiment, the distance estimates and the position estimates of devices 202a-c are all gathered at one of devices 202a-c (e.g., device 202a), which calculates a position estimate of device 202d and then transmits the position estimate to device 202d. In a similar fashion, devices 202a-c may cooperate to enable a mobile device 302 learn its position, as illustrated in example 300 of FIG. 3.

In an embodiment, devices 202a-d may be part of a fixed access point network that spans one or more indoor and/or outdoor locations. As soon as three access points (e.g., devices 202a-c) of the network learn their positions (either through pre-configuration or by self-learning), position learning may propagate to other access points (e.g., device 202d) in the network. In an embodiment, the access point network may extend over several adjacent buildings, with position learning starting in one building with three access points (e.g., devices 202a-c) learning their respective positions and then spreading to other nearby access points in the same building or in an adjacent building, for example.

An access point in the network may re-compute its position as desired. In an embodiment, the access point may periodically determine the validity of its position, and if its position is no longer valid may attempt to compute a new position estimate. For example, the access point may store the received positions of neighboring access points. Subsequently, the access point may (periodically, for example) compute the positions of the neighboring access points based on its current position estimate and subsequent signal exchanges with the neighboring access points. If the access point determines that all neighboring access points appear to have moved (e.g., the re-computed position does not match the stored position for every neighboring access point), then the access point infers that it has been moved and attempts to re-calculate its position. Otherwise, if some, but not all, of the neighboring access points appear to have moved, then the access point infers that some of the neighboring access points have been moved but that it has not been moved.

In other embodiments of the present disclosure, a device, such as device 102 or devices 202a-c, for example, further includes the ability to calculate the angle-of-arrival (AOA) of a received signal. With this ability, the device may estimate its position with signals received from only two different locations (instead of three different locations).

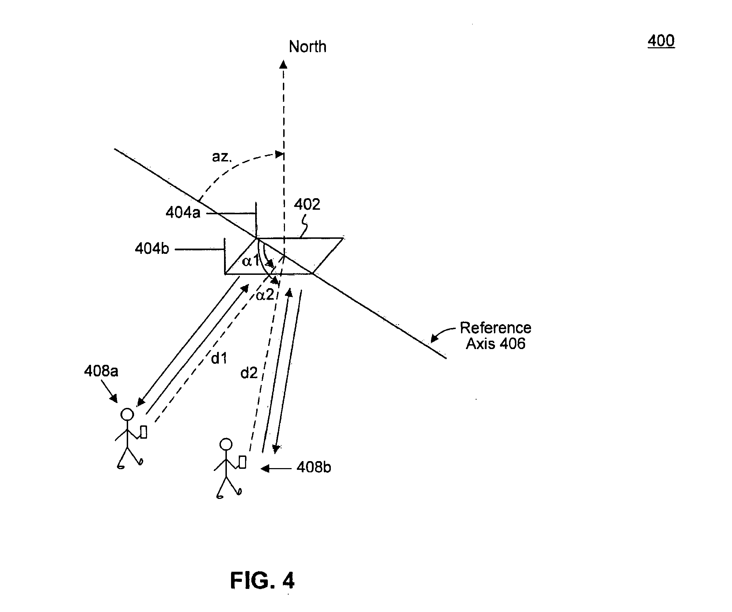

An example 400 of such embodiments is provided in FIG. 4, which shows a device 402 and two mobile devices 408a and 408b in communication range of each other. Device 402 may be like device 102 described above in FIG. 1. In particular, device 402 may estimate distances to other devices based on signal exchanges with the other devices as described above, and more specifically, in an embodiment, based on round-trip delay measurements to the other devices.

In addition, device 402 includes an antenna array, including at least two antennas 404a and 404b. The antenna array allows device 402 to determine the angle-of-arrival of a received signal by calculating at least one phase difference (or time difference) between multiple versions of the signal received by the at least two antennas 404a and 404b. In an embodiment, the angle-of-arrival of a received signal is measured relative to a reference axis 406 of device 402.

In an embodiment, device 402 may perform a signal exchange with each of mobile devices 408a and 408b located at first and second different locations. Based on the signal exchanges, device 402 estimates distances $d_1$ and $d_2$ to the first and second locations and receives position estimates of the first and second locations, in a similar manner as described above with respect to device 102 in FIG. 1. In addition, based on one or more signals from each signal exchange, device 402 estimates an angle-of-arrival $\alpha_1$ for signals received from mobile device 408a and an angle-of-arrival $\alpha_2$ for signals received from mobile device 408b. In an embodiment, $\alpha_1$ and $\alpha_2$ are determined relative to reference axis 406 of device 402.

Device 402 may then compute an estimate of its position using the position estimates of the first and second locations, distance estimates $d_1$ and $d_2$, and angles of arrival $\alpha_1$ and $\alpha_2$. In an embodiment, device 402 first computes an azimuth angle, which represents the orientation of device 402 relative to the magnetic North according to the formula:

$$az = \arcsin\left(\frac{lat_1 - lat_2}{S}\right) - \arcsin\left(\frac{d_2 \sin \alpha_2 - d_1 \sin \alpha_1}{S}\right) \qquad (1)$$

where $S = \sqrt{d_1^2 + d_2^2 - 2d_1 d_2 \cos(\alpha_1 - \alpha_2)}$, $lat_1$ is the latitude of the first location, and $lat_2$ is the latitude of the second location.

Then, device 402 may estimate its own position using the equations:

$$lat_0 = lat_1 + d_1 \cos(\alpha_1 + az) \text{ and } lon_0 = lon_1 + d_1 \sin(\alpha_1 + az) \qquad (2)$$

where $lat_0$ and $lon_0$ are the latitude and longitude of device 402 respectively. Alternatively, device 402 may use the latitude and longitude of the second location, distance estimate $d_2$, and angle-of-arrival $\alpha_2$ in equations (2) to estimate its position.

As would be understood by a person of skill in the art based on the teachings herein, the azimuth angle and the position estimate may be computed using any coordinate system (e.g., latitude/longitude, x,y coordinates referenced to an origin point, local polar coordinate system, etc.) according to embodiments of the present disclosure. A person of skill in the art would appreciate that equations (1) and (2) above can readily transformed to use any other coordinate system.

In other embodiments, device 402 may have prior knowledge of its azimuth angle. For example, device 402 may include a magnetometer that provides the orientation of device 402 relative to the magnetic North, may be pre-configured with its orientation, or may have already computed its azimuth angle based on two received signals as described above. In such embodiments, device 402 may estimate its position by performing a signal exchange with only one of mobile devices 408a and 408b. For example, device 402 may perform a signal exchange with mobile device 408a to learn a position estimate of mobile device 408a, and to estimate the distance $d_1$ to mobile device 408a and the angle-of-arrival $\alpha_1$ for signals received from mobile device 408a. Then, device 402 may use equation (2) above to estimate its position based on the position estimate of mobile device 408a, the distance $d_1$, and the angle-of-arrival $\alpha_1$.

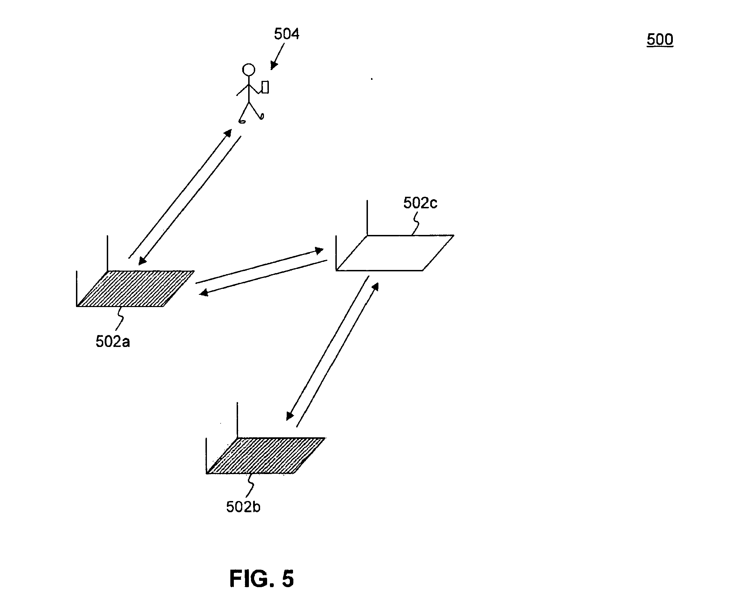

In an embodiment, after learning its position and orientation, device 402 may assist other devices in determining their own positions. This is illustrated in FIG. 5, which shows an example 500 according to an embodiment of the present disclosure. Specifically, example 500 illustrates three devices 502a-c, which may be fixed or mobile, and a mobile device 504. Devices 502a and 502b have knowledge of their respective positions and orientations (either pre-configured or self-learned).

In an embodiment, device 502c may perform similar position determination algorithms (e.g., based on round-trip delay and angle-of-arrival measurements) as described above with respect to device 402. Accordingly, device 502c may determine its position and orientation based on signal exchanges with each of devices 502a and 502b.

In another embodiment, device 502c may not support position determination algorithms. In such embodiment, device 502a and/or device 502b, which know their respective positions and orientations, may assist device 502c to learn its position. In an embodiment, device 502a (or 502b) may perform a signal exchange with device 502c to estimate a distance to device 502c and an angle-of-arrival for signals received from device 502c. Then, device 502a (or 502b) may use equations (2) above to determine the coordinates of device 502c. Device 502a (or 502b) may then share the determined coordinates with device 502c. In a similar fashion, device 502a may assist a mobile device 504 determine its position.

In an embodiment, devices 502a-c may be part of a fixed access point network that spans one or more indoor and/or outdoor locations. As soon as one access point (e.g., device 502a) of the network learns its position and orientation (either through pre-configuration or by self-learning), position learning may propagate to other access points (e.g., device 502c) in the network. In an embodiment, the access point network may extend over several adjacent buildings, with position learning starting in one building with a single access point (e.g., devices 502a) learning its position and orientation and then spreading to other nearby access points in the same building or in an adjacent building, for example.

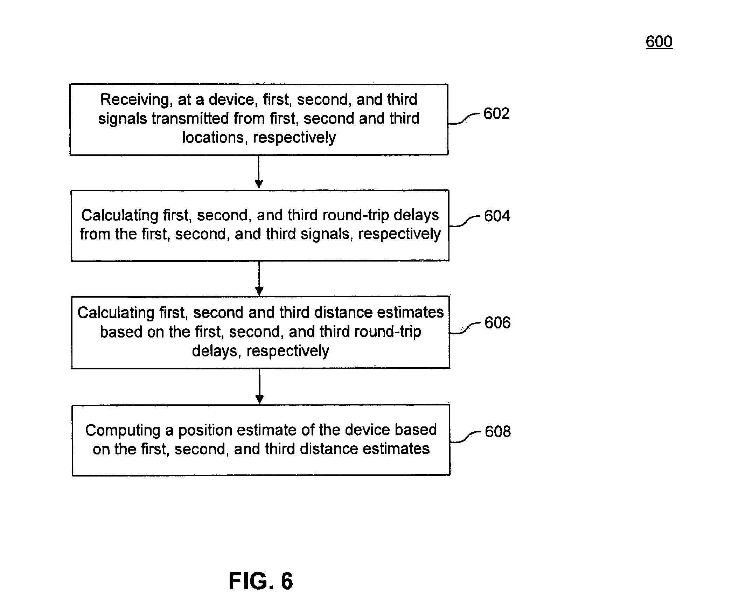

FIG. 6 is a process flowchart 600 of a method for position estimation according to an embodiment of the present disclosure. Process 600 may be performed by a fixed device, such as an access point (e.g., WLAN access point), or by a mobile device, such as a cellular handset.

As shown in FIG. 6, process 600 begins in step 602, which includes receiving, at a device, first, second, and third signals transmitted from first, second, and third locations, respectively. The first, second, and third signals include respectively first, second, and third position estimates, associated respectively with the first, second, and third locations. In embodiments, the first, second, and third signals may be transmitted by any combination of fixed and mobile devices. For example, the first signal may be transmitted by a mobile device, and the second and third signals may be transmitted by fixed devices. Two or more of the first, second, and third signals may also be transmitted by the same mobile device. In an embodiment, at least one of the first, second, and third signals includes a wireless local area network (WLAN) frame, such as a 802.11 frame.

Subsequently, process 600 proceeds to step 604, which includes calculating first, second, and third round-trip delays from the first, second, and third signals, respectively. In an embodiment, the first, second, and third signals are received in step 602 following one or more signal exchanges between the device and each of the transmitting devices at the first, second, and third locations. For example, the first signal may be received from a first mobile device in response to a previous signal transmitted from the device to the mobile device. The first signal may include a timestamp that can be used to estimate the round-trip signal propagation delay between the device and the first mobile device. In an embodiment, at least one of the first, second, and third round-trip delays is calculated as an average of multiple round-trip delay measurements.

Process 600 then proceeds to step 606, which includes calculating first, second, and third distance estimates based on the first, second, and third round-trip delays, respectively. The first, second, and third distance estimates estimate distances from the device to the first, second, and third locations, respectively. In an embodiment, the first, second, and third distance estimates are calculated based on the first, second, and third round-trip delays and the speed of light. For example, the first/second/third distance estimate may be calculated as the first/second/third round-trip delay, divided by two, and multiplied by the speed of light.

Process 600 terminates in step 608, which includes computing a position estimate of the device based on the first, second, and third distance estimates. In an embodiment, step 608 includes computing the position estimate of the device based on the first, second, and third distance estimates and the first, second, and third position estimates.

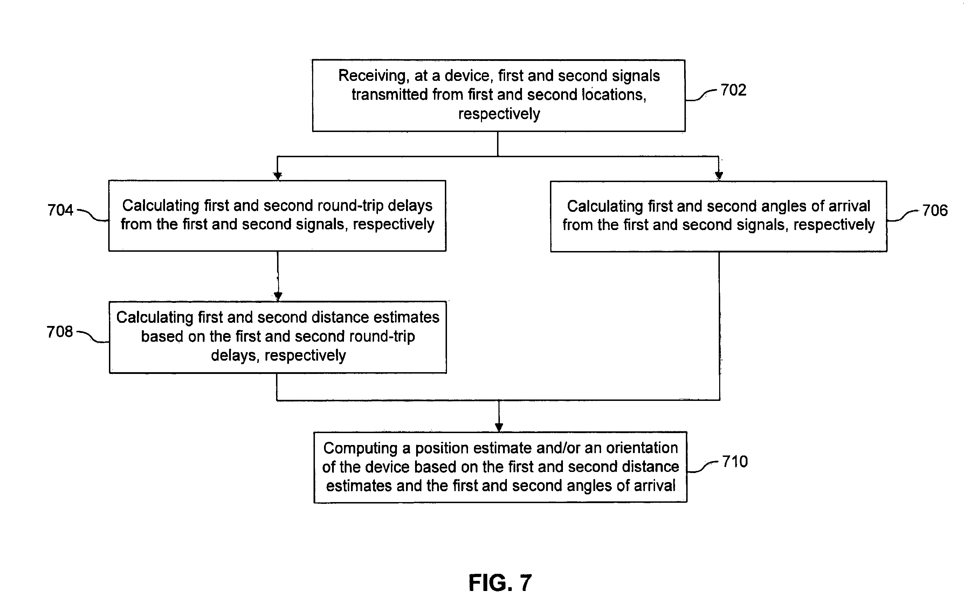

FIG. 7 is a process flowchart 700 of a method for position estimation according to an embodiment of the present disclosure. Process 700 may be performed by a fixed device, such as an access point (e.g., WLAN access point), or by a mobile device, such as a cellular handset.

As shown in FIG. 7, process 700 begins in step 702, which includes receiving, at a device, first and second signals transmitted from first and second locations, respectively. The first and second signals include respectively first and second position estimates, associated respectively with the first and second locations. In embodiments, the first and second signals may be transmitted by any combination of fixed and mobile devices. For example, the first signal may be transmitted by a mobile device, and the second signal may be transmitted by a fixed device. The first and second signals may also be transmitted by the same mobile device. In an embodiment, at least one of the first and second signals includes a wireless local area network (WLAN) frame, such as a 802.11 frame.

Process 700 then proceeds to step 704, which includes calculating first and second round-trip delays from the first and second signals, respectively. In an embodiment, the first and second signals are received in step 702 following one or more signal exchanges between the device and each of the transmitting devices at the first and second locations. For example, the first signal may be received from a first mobile device in response to a previous signal transmitted from the device to the mobile device. The first signal may include a timestamp that can be used to estimate the round-trip signal propagation delay between the device and the first mobile device. In an embodiment, at least one of the first and second round-trip delays is calculated as an average of multiple round-trip delay measurements.

At the same or at a different time, in step 706, process 700 includes calculating first and second angles of arrival from the first and second signals, respectively. In an embodiment, calculating the first/second angle of arrival includes calculating at least one phase difference between multiple versions of the first/second signal received by multiple antennas of the device.

After step 704, process 700 includes, in step 708, calculating first and second distance estimates based on the first and second round-trip delays. The first and second distance estimates estimate distances from the device to the first and second locations, respectively. In an embodiment, the first and second distance estimates are calculated based on the first and second round-trip delays and the speed of light. For example, the first/second distance estimate may be calculated as the first/second round-trip delay, divided by two, and multiplied by the speed of light.

Process 700 terminates in step 710, which includes computing a position estimate and/or an orientation of the device based on the first and second distance estimates and the first and second angles of arrival. In an embodiment, step 710 further includes computing an azimuth angle of the device based on the first and second position estimates and the first and second angles of arrival, and then computing the position estimate based on the azimuth angle, the first (or second) position estimate, and the first (or second) angle of arrival. In an embodiment, the azimuth angle represents an angular separation of a reference axis of the device (relative to which the first and second angles of arrival are measured) relative to the magnetic North.

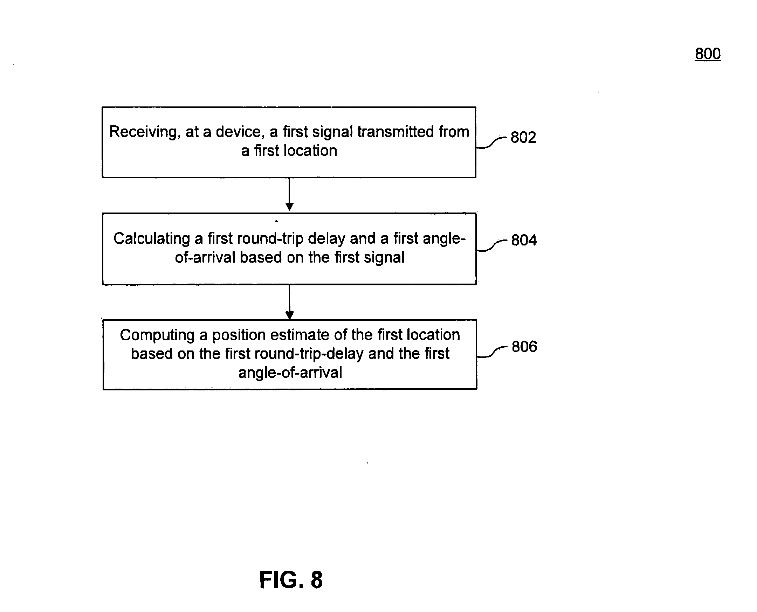

At the end of process 700, the device has an estimate of its position (e.g., latitude, longitude) and its orientation (azimuth angle). With this information, the device may assist other devices to obtain position estimates. This is illustrated in FIG. 8, which shows a process flowchart 800 of a method according to an embodiment of the present disclosure. Process 800 may be performed by a fixed device, such as an access point (e.g., WLNA access point), or by a mobile device, such as a cellular handset.

As shown in FIG. 8, process 800 begins in step 802, which includes receiving, at the device, a first signal transmitted from a first location. The first signal is transmitted by another device located at the first location and that is trying to determine its position.

Subsequently, in step 804, process 800 includes calculating a first round-trip delay and a first angle-of-arrival based on the first signal. In an embodiment, the first signal is received in step 802 following one or more signal exchanges between the device and the other device at the first location. For example, the first signal may be received from a mobile device in response to a previous signal transmitted from the device to the mobile device. The first signal may include a timestamp that can be used to estimate the round-trip signal propagation delay between the device and the mobile device. In an embodiment, the first round-trip delay is calculated as an average of multiple round-trip delay measurements. In an embodiment, step 804 further includes calculating a first distance estimate to the first location based on the first round-trip delay.

Process 800 terminates in step 806, which includes computing a position estimate of the first location based on the first round-trip delay and the first angle-of-arrival. In an embodiment, step 806 further includes using the known position and azimuth angle of the device and the first distance estimate to the first location to compute the position estimate. The device may then communicate the position estimate to the other device located at the first location.

It will be apparent to persons skilled in the relevant art(s) that various elements and features of the present disclosure, as described herein, can be implemented in hardware using analog and/or digital circuits, in software, through the execution of instructions by one or more general purpose or special-purpose processors, or as a combination of hardware and software.

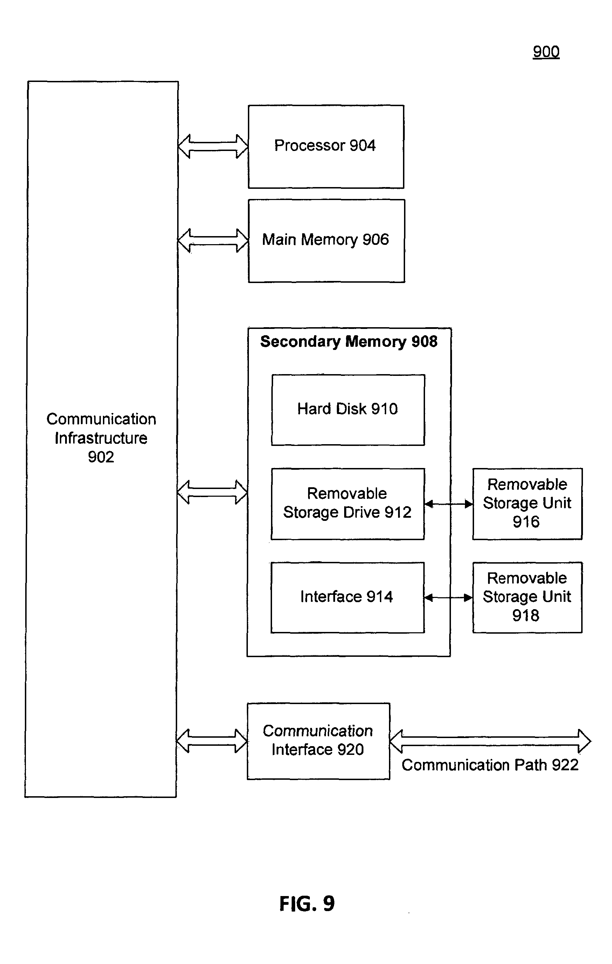

The following description of a general purpose computer system is provided for the sake of completeness. Embodiments of the present disclosure can be implemented in hardware, or as a combination of software and hardware. Consequently, embodiments of the disclosure may be implemented in the environment of a computer system or other processing system. An example of such a computer system 900 is shown in FIG. 9. Embodiments described in FIGs. 1-5 may execute on one or more computer systems 900. Furthermore, each of the steps of the processes depicted in FIGs. 6, 7, and 8 can be implemented on one or more computer systems 900.

Computer system 900 includes one or more processors, such as processor 904. Processor 904 can be a special purpose or a general purpose digital signal processor. Processor 904 is connected to a communication infrastructure 902 (for example, a bus or network). Various software implementations are described in terms of this exemplary computer system. After reading this description, it will become apparent to a person skilled in the relevant art(s) how to implement the disclosure using other computer systems and/or computer architectures.

Computer system 900 also includes a main memory 906, preferably random access memory (RAM), and may also include a secondary memory 908. Secondary memory 908 may include, for example, a hard disk drive 910 and/or a removable storage drive 912, representing a floppy disk drive, a magnetic tape drive, an optical disk drive, or the like. Removable storage drive 912 reads from and/or writes to a removable storage unit 916 in a well-known manner. Removable storage unit 916 represents a floppy disk, magnetic tape, optical disk, or the like, which is read by and written to by removable storage drive 912. As will be appreciated by persons skilled in the relevant art(s), removable storage unit 916 includes a computer usable storage medium having stored therein computer software and/or data.

In alternative implementations, secondary memory 908 may include other similar means for allowing computer programs or other instructions to be loaded into computer system 900. Such means may include, for example, a removable storage unit 918 and an interface 914. Examples of such means may include a program cartridge and cartridge interface (such as that found in video game devices), a removable memory chip (such as an EPROM, or PROM) and associated socket, a thumb drive and USB port, and other removable storage units 918 and interfaces 914 which allow software and data to be transferred from removable storage unit 918 to computer system 900.

Computer system 900 may also include a communications interface 920. Communications interface 920 allows software and data to be transferred between computer system 900 and external devices. Examples of communications interface 920 may include a modem, a network interface (such as an Ethernet card), a communications port, a PCMCIA slot and card, etc. Software and data transferred via communications interface 920 are in the form of signals which may be electronic, electromagnetic, optical, or other signals capable of being received by communications interface 920. These signals are provided to communications interface 920 via a communications path 922. Communications path 922 carries signals and may be implemented using wire or cable, fiber optics, a phone line, a cellular phone link, an RF link and other communications channels.

As used herein, the terms "computer program medium" and "computer readable medium" are used to generally refer to tangible storage media such as removable storage units 916 and 918 or a hard disk installed in hard disk drive 910. These computer program products are means for providing software to computer system 900.

Computer programs (also called computer control logic) are stored in main memory 906 and/or secondary memory 908. Computer programs may also be received via communications interface 920. Such computer programs, when executed, enable the computer system 900 to implement the present disclosure as discussed herein. In particular, the computer programs, when executed, enable processor 904 to implement the processes of the present disclosure, such as any of the methods described herein. Accordingly, such computer programs represent controllers of the computer system 900. Where the disclosure is implemented using software, the software may be stored in a computer program product and loaded into computer system 900 using removable storage drive 912, interface 914, or communications interface 920.

In another embodiment, features of the disclosure are implemented primarily in hardware using, for example, hardware components such as application-specific integrated circuits (ASICs) and gate arrays. Implementation of a hardware state machine so as to perform the functions described herein will also be apparent to persons skilled in the relevant art(s).

Embodiments have been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the disclosure that others can, by applying knowledge within the skill of the art, readily modify and/or adapt for various applications such specific embodiments, without undue experimentation, without departing from the general concept of the present disclosure. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of embodiments of the present disclosure should not be limited by any of the above-described exemplary embodiments, but should be defined only in accordance with the following claims and their equivalents.

## Claims

1. A method for position estimation, comprising:

   receiving, at a device, first, second, and third signals, the first, second, and third signals transmitted from first, second, and third locations, respectively;
   calculating first, second, and third round-trip delays from the first, second, and third signals, respectively;
   calculating first, second, and third distance estimates based on the first, second, and third round-trip delays, respectively, wherein the first, second, and third distance estimates estimate distances from the device to the first, second, and third locations, respectively; and
   computing a position estimate of the device based on the first, second, and third distance estimates.

2. The method of claim 1, wherein the device is a fixed access point or a mobile device.

3. The method of claim 1 or 2, wherein at least one of the first, second, and third signals is transmitted by a mobile device.

4. The method of any preceding claim, wherein the first, second, and third signals are transmitted by a same mobile device.

5. The method of any preceding claim, wherein at least one of the first, second, and third signals is transmitted by a fixed access point.

6. The method of any preceding claim, wherein the device is a fixed access point, and wherein at least one of the first, second, and third signals is transmitted by another fixed access point.

7. The method of any preceding claim, wherein at least one of the first, second, and third signals includes a wireless local area network (WLAN) frame.

8. The method of any preceding claim, wherein the first, second, and third signals include respectively first, second, and third position estimates, the first, second, and third position estimates associated respectively with the first, second, and third locations.

9.  The method of claim 8, wherein computing the position estimate of the device comprises computing the position estimate based on the first, second, and third distance estimates and the first, second, and third position estimates.

10. A method for position estimation, comprising:

   receiving, at a device, first and second signals, the first and second signals transmitted from first and second locations, respectively;
   calculating first and second round-trip delays from the first and second signals, respectively;
   calculating first and second distance estimates based on the first and second round-trip delays, respectively, wherein the first and second distance estimates estimate distances from the device to the first and second locations, respectively;
   calculating first and second angles of arrival from the first and second signals, respectively; and
   computing a position estimate of the device based on the first and second distance estimates and the first and second angles of arrival.

11. The method of claim 10, wherein the first and second signals include respectively first and second position estimates, the first and second position estimates associated respectively with the first and second locations.

12. The method of claim 11, wherein computing the position estimate of the device comprises computing an azimuth angle of the device based on the first and second position estimates and the first and second angles of arrival.

13. The method of claim 12, wherein computing the position estimate of the device comprises computing the position estimate based on the azimuth angle, the first position estimate, and the first angle of arrival.

14. A positioning network, comprising:

   a first device configured to receive a first signal from a mobile device and to calculate a first distance estimate to the mobile device;
   a second device configured to receive a second signal from the mobile device and to calculate a second distance estimate to the mobile device; and
   a third device configured to receive a third signal from the mobile device and to calculate a third distance estimate to the mobile device,
   wherein the first device is further configured to compute a position estimate of the mobile device based on the first, second, and third distance estimates and position estimates of the first, second, and third devices.

15. The positioning network of claim 14, wherein the first device is further configured to communicate the position estimate to the mobile device.

EP 2 680 033 A1

**FIG. 1**

200

202d

202c

202b

202a

FIG. 2

EP 2 680 033 A1

**FIG. 3**

400

North

az.

404a

404b

402

α1

α2

Reference
Axis 406

d1

d2

408a

408b

FIG. 4

FIG. 5

```
┌─────────────────────────────────────────┐
│ Receiving, at a device, first, second, and third │
│ signals transmitted from first, second and third │──╮─ 602
│ locations, respectively              │
└─────────────────────────────────────────┘
                    │
                    ▼
┌─────────────────────────────────────────┐
│ Calculating first, second, and third round-trip delays │──╮─ 604
│ from the first, second, and third signals, respectively │
└─────────────────────────────────────────┘
                    │
                    ▼
┌─────────────────────────────────────────┐
│ Calculating first, second and third distance estimates │
│ based on the first, second, and third round-trip │──╮─ 606
│ delays, respectively              │
└─────────────────────────────────────────┘
                    │
                    ▼
┌─────────────────────────────────────────┐
│ Computing a position estimate of the device based │──╮─ 608
│ on the first, second, and third distance estimates │
└─────────────────────────────────────────┘
```

**FIG. 6**

EP 2 680 033 A1

**FIG. 7**

EP 2 680 033 A1

Receiving, at a device, a first signal transmitted from a first location — 802

Calculating a first round-trip delay and a first angle-of-arrival based on the first signal — 804

Computing a position estimate of the first location based on the first round-trip-delay and the first angle-of-arrival — 806

**FIG. 8**

900

Processor 904

Main Memory 906

Secondary Memory 908

Hard Disk 910

Removable
Storage Drive 912

Interface 914

Removable
Storage Unit
916

Removable
Storage Unit
918

Communication
Infrastructure
902

Communication
Interface 920

Communication Path 922

FIG. 9

Europäisches
Patentamt
European
Patent Office
Office européen
des brevets

**EUROPEAN SEARCH REPORT**

Application Number

EP 13 00 3155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/063327 A2 (ITT MFG ENTERPRISES INC [US]; MCCRADY DENNIS D [US]; CUMMISKEY PETER []) 15 August 2002 (2002-08-15) <br> * abstract * <br> * page 6 - page 7 * <br> * page 10 - page 11 * <br> * figure 1 * <br> ----- | 1-9 | INV. <br> G01S13/87 <br> G01S5/12 |
| X | US 2008/274753 A1 (ATTAR RASHID AHMED AKBAR [US] ET AL) 6 November 2008 (2008-11-06) <br> * paragraph [0024] * <br> * paragraph [0060] * <br> ----- | 1-9 | |
| X | EP 1 094 335 A1 (LUCENT TECHNOLOGIES INC [US]) 25 April 2001 (2001-04-25) <br> * paragraph [0014] * <br> * paragraph [0042] * <br> * claims 1, 2 * <br> ----- | 10-13 | |
| X | US 2010/177681 A1 (SAHINOGLU ZAFER [US]) 15 July 2010 (2010-07-15) <br> * paragraph [0008] * <br> * figure 1c * <br> ----- | 14,15 | TECHNICAL FIELDS SEARCHED (IPC) <br><br> G01S |

The present search report has been drawn up for all claims

| Place of search | Date of completion of the search | Examiner |
|---|---|---|
| The Hague | 18 September 2013 | Renaudie, Cécile |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 13 00 3155

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2013

| Patent document cited in search report | | Publication date | Patent family member(s) | | Publication date |
|---|---|---|---|---|---|
| WO 02063327 | A2 | 15-08-2002 | NONE | | |
| US 2008274753 | A1 | 06-11-2008 | CN | 101675358 A | 17-03-2010 |
| | | | EP | 2145205 A2 | 20-01-2010 |
| | | | EP | 2463679 A1 | 13-06-2012 |
| | | | JP | 2010529419 A | 26-08-2010 |
| | | | JP | 2013040947 A | 28-02-2013 |
| | | | KR | 20100002279 A | 06-01-2010 |
| | | | US | 2008274753 A1 | 06-11-2008 |
| | | | US | 2013065610 A1 | 14-03-2013 |
| | | | WO | 2008137607 A2 | 13-11-2008 |
| EP 1094335 | A1 | 25-04-2001 | AU | 6241800 A | 12-04-2001 |
| | | | BR | 0004510 A | 29-05-2001 |
| | | | CA | 2321395 A1 | 05-04-2001 |
| | | | CN | 1291062 A | 11-04-2001 |
| | | | EP | 1094335 A1 | 25-04-2001 |
| | | | JP | 2001147262 A | 29-05-2001 |
| | | | KR | 20010050829 A | 25-06-2001 |
| | | | US | 6300905 B1 | 09-10-2001 |
| US 2010177681 | A1 | 15-07-2010 | JP | 2010160132 A | 22-07-2010 |
| | | | US | 2010177681 A1 | 15-07-2010 |

EPO FORM P0459

For more details about this annex : see Official Journal of the European Patent Office, No. 12/82